# EUROPEAN PATENT APPLICATION

(11) **EP 4 395 023 A1**
(43) Date of publication of application: **03.07.2024**
(21) Application number: 22874954.5
(22) Date of filing: 28.09.2022
(51) Int. Cl.: H01M 50/147, H01M 50/30

(54) **POLISHED ALUMINUM SHEET FOR LITHIUM BATTERY, TOP COVER, AND LITHIUM BATTERY**

(30) Priority: 29.09.2021 CN 202122384619 U
(71) Applicant: SVOLT ENERGY TECHNOLOGY CO., LTD, Changzhou, Jiangsu 213200 (CN)
(72) Inventor: YU, Dongpeng, hangzhou, Jiangsu 213200 (CN); YANG, Hongxin, hangzhou, Jiangsu 213200 (CN); LUO, Zhaojun, hangzhou, Jiangsu 213200 (CN); GAO, Fei, hangzhou, Jiangsu 213200 (CN)
(74) Representative: Groth & Co. KB
(86) International application number: PCT/CN2022/121985
(87) International publication number: WO 2023/051569

(57) **Abstract**

The present application relates to the technical field of lithium battery structures, in particular to a polished aluminum sheet for a lithium battery, a top cover, and a lithium battery. The polished aluminum sheet for a lithium battery comprises: a polished aluminum sheet body provided with an explosion-proof hole suitable for mounting an explosion-proof valve therein; a first reinforcing portion protruding or recessed from one surface of the polished aluminum sheet body and continuously or discontinuously surrounding the explosion-proof hole, the first reinforcing portion being spaced apart from the explosion-proof hole; and a second reinforcing portion protruding or recessed from the other surface of the polished aluminum sheet body and continuously or discontinuously surrounding the explosion-proof hole, the second reinforcing portion being spaced apart from the explosion-proof hole. According to the polished aluminum sheet for a lithium battery, the top cover, and the lithium battery which are provided in the present application, the local strength at the position on the polished aluminum sheet where the explosion-proof valve is mounted can be enhanced, such that the explosion-proof valve is prevented from deforming.

## Description

### CROSS-REFERENCE TO RELATED APPLICATIONS

The present application claims the priority of the Chinese patent application No. 202122384619.5 filed to the China Patent Office on September 29, 2021, and entitled "Polished Aluminum Sheet for Lithium Battery, Top Cover, and Lithium Battery", of which the entire contents are incorporated herein by reference.

### TECHNICAL FIELD

The present application relates to the technical field of lithium battery structures, in particular to a polished aluminum sheet for a lithium battery, a top cover, and a lithium battery.

### BACKGROUND

With the increasing maturity of a lithium battery technology, a lithium battery is widely used as a power battery in fields of electric vehicles and energy storage, and the requirements for operational performance and safety of the lithium battery are increasing. As an accessory in the lithium battery, a top cover first serves as a sealing function by welding with an aluminum shell to isolate an internal environment and an external environment; and secondly, the top cover connects an internal circuit with an external circuit to transport a current inside the battery to the outside through a top cover pole, thereby playing a guiding role.

The top cover of the lithium battery is generally composed of a polished aluminum sheet and a pole as well as an explosion-proof valve which are mounted on the polished aluminum sheet. In order to increase an effective space inside a battery cell and decrease a weight of the battery cell, a thickness of the polished aluminum sheet is generally in a range from 1.5 mm to 2.0 mm, with a weak strength. When air pressure is generated inside the battery cell during cyclic use, the polished aluminum sheet will deform, and deformation will extend to a region where the explosion-proof valve is mounted, thus forcing the explosion-proof valve to deform, thereby affecting an opening pressure of the explosion-proof valve, which will have an adverse impact on the use safety of the battery cell.

### SUMMARY OF THE INVENTION

Therefore, the technical problem to be solved by the present application is to overcome a defect that an explosion-proof valve on a top cover of a lithium battery is prone to deformation in the prior art, thereby providing a polished aluminum sheet of a lithium battery, a top cover, and the lithium battery that can enhance a local strength at a position on the polished aluminum sheet where an explosion-proof valve is mounted.

To solve the technical problem above, a polished aluminum sheet for a lithium battery provided by the present application includes:
a polished aluminum sheet body, provided with an explosion-proof hole suitable for mounting an explosion-proof valve therein;
a first reinforcing portion, protruding or recessed from one surface of the polished aluminum sheet body and continuously or discontinuously surrounding the explosion-proof hole, the first reinforcing portion being spaced apart from the explosion-proof hole; and
a second reinforcing portion, protruding or recessed from the other surface of the polished aluminum sheet body and continuously or discontinuously surrounding the explosion-proof hole, the second reinforcing portion being spaced apart from the explosion-proof hole.

Optionally, a distance between the first reinforcing portion and/or the second reinforcing portion and the explosion-proof hole is in a range from 1 mm to 5 mm.

Optionally, the first reinforcing portion and the second reinforcing portion are formed by synchronous stamping.

Optionally, a width of a protrusion formed by stamping is in a range from 1 mm to 5 mm, and a width of a groove is in a range from 2 mm to 6 mm.

Optionally, the first reinforcing portion and/or the second reinforcing portion are/is elliptical.

Optionally, the first reinforcing portion and/or the second reinforcing portion are/is four independent strip structures, and the four strip structures surround the explosion-proof hole and are distributed and spaced apart from each other.

A top cover provided by the present application includes:
the aforementioned polished aluminum sheet for the lithium battery; and
an explosion-proof valve, mounted in an explosion-proof hole.

A lithium battery provided by the present application includes:
the aforementioned top cover.

The technical solution of the present application has the following advantages:
1. according to the polished aluminum sheet for the lithium battery, the top cover, and the lithium battery provided by the present application, the reinforcing portions surrounding the explosion-proof hole are arranged on the two surfaces of the polished aluminum sheet body, and there is a gap between the reinforcing portions and the explosion-proof hole. When an internal air pressure increases due to the cyclic use of a battery cell, the polished aluminum sheet will deform. However, because the reinforcing portions will increase a local strength of a position corresponding to the polished aluminum sheet body, the deformation will be blocked when it extends to positions of the reinforcing portions, ensuring that a region of the explosion-proof hole will not deform, thereby ensuring that the explosion-proof valve will not deform, and ultimately ensuring a stability of an opening pressure of the explosion-proof valve.
2. According to the polished aluminum sheet for the lithium battery, the top cover, and the lithium battery provided by the present application, the gap between the reinforcing portions and the explosion-proof hole is in a range from 1 mm to 5 mm, which will not cause deformation of a region of the polished aluminum sheet body on an inner side surrounded by the reinforcing portions due to the large gap, nor will it directly affect the explosion-proof valve due to the deformation of a region of the polished aluminum sheet body on an outer side surrounded by the reinforcing portions due to the small gap, thereby effectively isolating the deformation and ensuring the normal performance of the explosion-proof valve.
3. According to the polished aluminum sheet for the lithium battery, the top cover, and the lithium battery provided by the present application, the two reinforcing portions are formed by synchronous stamping, which is convenient to machine.

### BRIEF DESCRIPTION OF THE DRAWINGS

In order to illustrate specific implementations of the present application or technical solutions in the prior art more clearly, accompanying drawings needing to be used in description of the specific implementations or the prior art will be introduced below briefly. Obviously, the accompanying drawings in the description below are some implementations of the present application, and those ordinarily skilled in the art can further obtain other accompanying drawings according to these accompanying drawings without inventive efforts.
FIG. 1 is a structural sectional view of a top cover of the present application.
FIG. 2 is a schematic structural diagram of a top cover of the present application.
FIG. 3 is a structural sectional view of an explosion-proof valve region of a top cover of the present application.
FIG. 4 is a structural sectional view of another top cover of the present application.
FIG. 5 is a schematic structural diagram of another top cover of the present application.
FIG. 6 is a structural sectional view of an explosion-proof valve region of another top cover of the present application.

### Description of reference numerals:

1, Polished aluminum sheet body; 11, Explosion-proof hole; 12, First reinforcing portion; 13, Second reinforcing portion; 2, Upper pole; 3, Lower pole; 4, Plastic part; 5, Sealing ring; and 6, Explosion-proof valve.

### DETAILED DESCRIPTION

The technical solutions of the present application will be described below clearly and completely with reference to the accompanying drawings. Apparently, the described embodiments are only part of the embodiments of the present application, but not all the embodiments. On the basis of the embodiments in the present application, all other embodiments obtained by those ordinarily skilled in the art without inventive efforts fall within the protection scope of the present application.

In the description of the present application, it should be noted that orientation or a position relationship indicated by terms "center", "upper", "lower", "left", "right", "vertical", "horizontal", "inner", "outer" and the like is orientation or a position relationship shown on the basis of the accompanying drawings, is only to facilitate description of the present application and simplify the description, rather than indicating or implying that the indicated apparatus or element must have a specific orientation or be constructed and operated in the specific orientation, and therefore cannot be understood as limitation to the present application. In addition, terms "first", "second" and "third" are only used for descriptive purposes, and cannot be understood as indicating or implying relative importance.

In the description of the present application, it should be noted that unless otherwise expressly stated and limited, terms "install", "connect" and "link" should be understood in a broad sense, for example, they may be a fixed connection, or a detachable connection, or an integrated connection; may be a mechanical connection, or an electrical connection; and may be a direct connection, or an indirect connection through an intermediate medium, or internal communication of two elements. Those ordinarily skilled in the art may understand the specific meaning of the above terms in the present application according to the specific situation.

In addition, the technical features involved in different implementations of the present application described below can be combined with each other as long as they do not conflict with each other.

### Embodiment 1

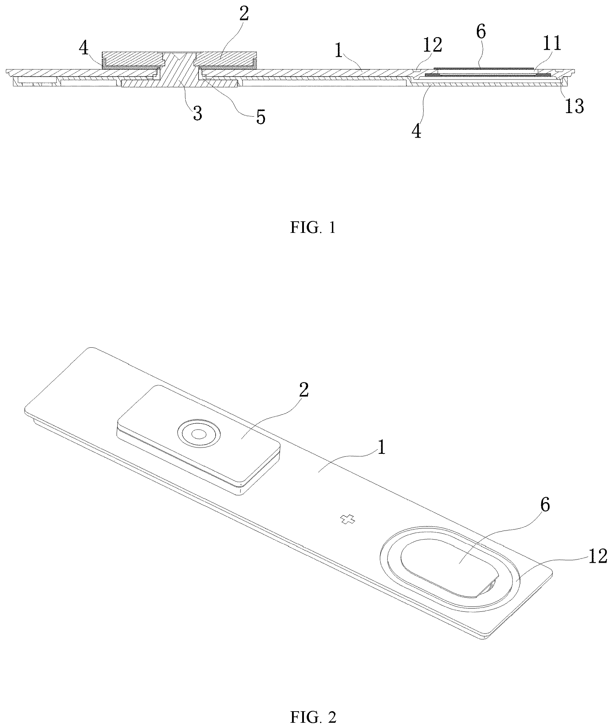

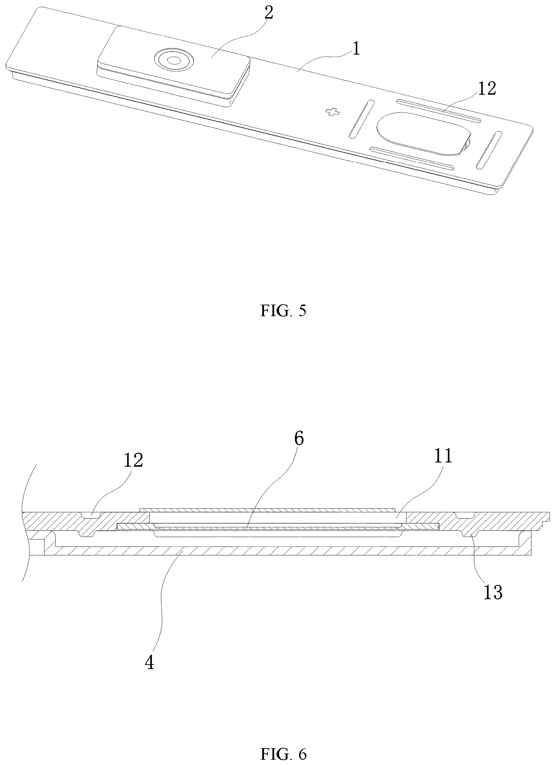

Referring to FIG. 1 to FIG. 6, a polished aluminum sheet for a lithium battery provided in this embodiment includes:
a polished aluminum sheet body 1, provided with an explosion-proof hole 11 suitable for mounting an explosion-proof valve 6 therein; the explosion-proof hole 11 being generally arranged as an ellipse;
a first reinforcing portion 12, protruding or recessed from one surface of the polished aluminum sheet body 1 and continuously or discontinuously surrounding the explosion-proof hole 11, the first reinforcing portion 12 being spaced apart from the explosion-proof hole 11, wherein, "protruding" means to form a protrusion, "recessed" means to form a groove, "continuously" means to form a circle (as shown in FIG. 2), and "discontinuously" means to form a plurality of independent parts (as shown in FIG. 5); and it should be noted that when the first reinforcing portion 12 is arranged discontinuously, each independent part cannot be too small, otherwise it will not have an effect of blocking deformation; and
a second reinforcing portion 13, protruding or recessed from the other surface of the polished aluminum sheet body 1 and continuously or discontinuously surrounding the explosion-proof hole 11, the second reinforcing portion 13 being spaced apart from the explosion-proof hole 11, wherein for detailed information, please refer to the description related to the first reinforcing portion 12 in the previous paragraph, which will not be repeated here.

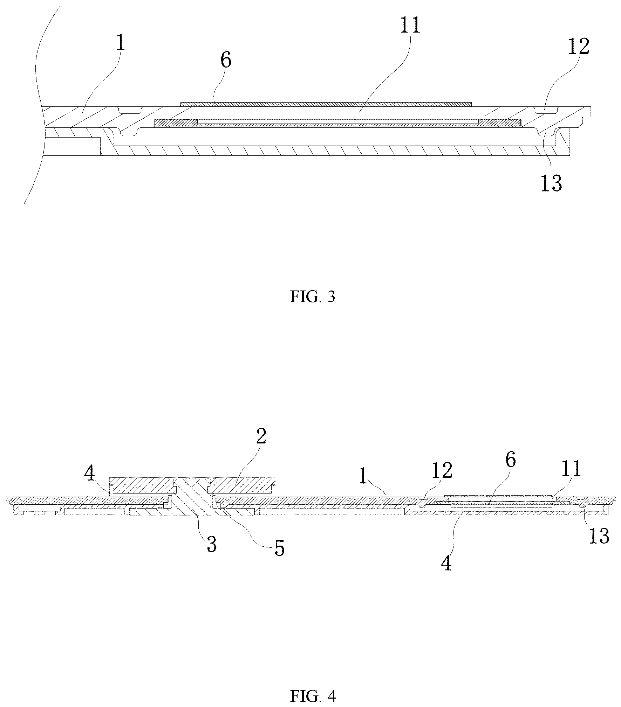

Specifically, the two reinforcing portions may take the following form. In a first aspect, the first reinforcing portion 12 is a protrusion protruding from the polished aluminum sheet body 1, and the second reinforcing portion 13 is a groove recessed from the polished aluminum sheet body 1; or the first reinforcing portion 12 and the second reinforcing portion 13 are both protrusions protruding from the polished aluminum sheet body 1; or the first reinforcing portion 12 is a groove recessed from the polished aluminum sheet body 1, and the second reinforcing portion 13 is a protrusion protruding from the polished aluminum sheet body 1 (as shown in FIG. 1 to FIG. 6); or, the first reinforcing portion 12 and the second reinforcing portion 13 are both grooves recessed from the polished aluminum sheet body 1. In a second aspect, the first reinforcing portion 12 is a circle continuously surrounding the explosion-proof hole 11, and the second reinforcing portion 13 is a plurality of parts spaced around the explosion-proof hole 11; or the first reinforcing portion 12 and the second reinforcing portion 13 are both circles surrounding the explosion-proof hole 11 (as shown in FIG. 1 to FIG. 3); or the first reinforcing portion 12 is a plurality of parts spaced around the explosion-proof hole 11, and the second reinforcing portion 13 is a circle continuously surrounding the explosion-proof hole 11; or, both the first reinforcing portion 12 and the second reinforcing portion 13 are a plurality of parts spaced around the explosion-proof hole 11 (as shown in FIG. 4 to FIG. 6). Moreover, the multiple situations of the first and second aspects mentioned above can be arranged and combined arbitrarily.

It is worth noting that when being the protrusions, the reinforcing portions may be fixedly connected to the polished aluminum sheet body 1 by welding or other means, or may be integrally formed on the polished aluminum sheet body 1; and when being grooves, the reinforcing portions can only be of an integrated structure opened on the polished aluminum sheet body 1.

According to the polished aluminum sheet for the lithium battery in this embodiment, the reinforcing portions surrounding the explosion-proof hole 11 are arranged on both surfaces of the polished aluminum sheet body 1, and the reinforcing portions can enhance a local strength of a corresponding region of the polished aluminum sheet body 1, thereby avoiding deformation of the region, ensuring that the explosion-proof valve 6 does not deform, and ultimately ensuring a stability of an opening pressure of the explosion-proof valve 6.

As a further limitation of the technical solution above, a distance between the first reinforcing portion 12/the second reinforcing portion 13 and the explosion-proof hole 11 is in a range from 1 mm to 5 mm. Specifically, the distance may be 1 mm, or 2 mm, or 3 mm, or 4 mm, or 5 mm. If a gap is too large, there is a large area left between the reinforcing portions and the explosion-proof hole 11, and this area is essentially still the polished aluminum sheet with a weak strength, so the polished aluminum sheet body 1 corresponding to this area is still prone to deformation. If the area is small, an anti-deformation ability will be greatly improved. If the gap is too small, when the polished aluminum sheet body 1 on an outer side of a region surrounded by the reinforcing portions deforms, it is prone to affecting the explosion-proof hole 11, which in turn affects the explosion-proof valve 6. Therefore, an optimal gap width value in this solution is in a range from 1 mm to 5 mm, which can effectively ensure that the explosion-proof valve 6 does not deform within this range.

Optionally, the first reinforcing portion 12 and the second reinforcing portion 13 are formed by synchronous stamping. That is, one reinforcing portion is a protrusion, the other reinforcing portion is a groove, and shapes and sizes of the protrusion and the groove are matched. The use of stamping to form the two reinforcing portions improves machining efficiency and can also enhance the local strength of a plate.

Optionally, a width of the protrusion formed by stamping is in a range from 1 mm to 5 mm, which specifically may be 1 mm or 3 mm or 5 mm; and a width of the groove is in a range from 2 mm to 6 mm, which specifically may be 2 mm or 4 mm or 6 mm.

Optionally, the first reinforcing portion 12 and/or the second reinforcing portion 13 are/is elliptical. An ellipse is a continuous structure connected end to end. The ellipse can adapt to a shape of the vast majority of existing explosion-proof holes 11, thereby minimizing the region surrounded by the reinforcing portions, maximizing its deformation resistance, and better ensuring that the explosion-proof valve 6 does not deform.

Optionally, the first reinforcing portion 12 and/or the second reinforcing portion 13 are/is four independent strip structures, and the four strip structures surround the explosion-proof hole 11 and are distributed at intervals. The plurality of independent strip structures have lower machining resistance such as punching and easier machining compared to a complete and continuous circular structure.

Optionally, depths of the first reinforcing portion 12 and the second reinforcing portion 13 are in a range from 0.5 mm to 2 mm.

### Embodiment 2

Referring to FIG. 1 to FIG. 6, a top cover provided in this embodiment includes:
the aforementioned polished aluminum sheet for the lithium battery; and
an explosion-proof valve 6, mounted in an explosion-proof hole 11. The explosion-proof valve is preferably fixed on the polished aluminum sheet in a welding mode.

Specifically, the top cover further includes an upper pole 2, a lower pole 3, a plastic part 4, and a sealing ring 5. The lower pole 3 penetrates through a through hole on a polished aluminum sheet body 1 to be riveted to the upper pole 2. Laser welding is carried out along a riveting edge to reduce an internal resistance of the connection; and insulation protection is performed between the polished aluminum sheet body 1 and the lower pole 3 as well as the upper pole 2 through the plastic part 4, and sealing performance of a contact position between the lower pole 3 and the through hole of the polished aluminum sheet body 1 is achieved through the sealing ring 5.

### Embodiment 3

A lithium battery provided by this embodiment includes the aforementioned top cover.

Obviously, the above embodiments are only examples for clear explanation, not for limitation of the implementations. For those ordinarily skilled in the art, other changes or variations in different forms can further be made on the basis of the above description. It is unnecessary and impossible to enumerate all the implementations here. The obvious changes or variations arising therefrom are still within the protection scope of the present application.

## Claims

1. A polished aluminum sheet for a lithium battery, comprising:
a polished aluminum sheet body (1), provided with an explosion-proof hole (11) suitable for mounting an explosion-proof valve (6) therein;
a first reinforcing portion (12), protruding or recessed from one surface of the polished aluminum sheet body (1) and continuously or discontinuously surrounding the explosion-proof hole (11), the first reinforcing portion (12) being spaced apart from the explosion-proof hole (11); and
a second reinforcing portion (13), protruding or recessed from the other surface of the polished aluminum sheet body (1) and continuously or discontinuously surrounding the explosion-proof hole (11), the second reinforcing portion (13) being spaced apart from the explosion-proof hole (11).

2. The polished aluminum sheet for the lithium battery according to claim 1, wherein a distance between the first reinforcing portion (12) and/or the second reinforcing portion (13) and the explosion-proof hole (11) is in a range from 1 mm to 5 mm.

3. The polished aluminum sheet for the lithium battery according to claim 1, wherein the first reinforcing portion (12) and the second reinforcing portion (13) are formed by synchronous stamping.

4. The polished aluminum sheet for the lithium battery according to claim 3, wherein a width of a protrusion formed by stamping is in a range from 1 mm to 5 mm, and a width of a groove is in a range from 2 mm to 6 mm.

5. The polished aluminum sheet for the lithium battery according to any one of claims 1 to 4, wherein the first reinforcing portion (12) and/or the second reinforcing portion (13) are/is elliptical.

6. The polished aluminum sheet for the lithium battery according to any one of claims 1 to 4, wherein the first reinforcing portion (12) and/or the second reinforcing portion (13) are/is four independent strip structures, and the four strip structures surround the explosion-proof hole (11) and are distributed and spaced apart from each other.

7. A top cover, comprising:
the polished aluminum sheet for the lithium battery according to any one of claims 1 to 6; and
an explosion-proof valve (6), mounted in an explosion-proof hole (11).

8. A lithium battery, comprising:
the top cover according to claim 7.
